# EUROPEAN PATENT APPLICATION

(11) **EP 1 796 247 A2**
(43) Date of publication of application: **13.06.2007**
(21) Application number: 06025139.4
(22) Date of filing: 05.12.2006
(51) Int. Cl.: H02K 15/03

(54) **Mold used for manufacturing electric motor rotor**

(30) Priority: 08.12.2005 JP 2005354643
(71) Applicant: FANUC LTD, Minamitsuru-gun, Yamanashi 401-0597 (JP)
(72) Inventor: Okamoto, Takashi FANUC Manshonharimomi, Minamitsuru-gun Yamanashi 401-0511 (JP); Maeda, Takuya FANUC Manshonharimomi, Minamitsuru-gun Yamanashi 401-0511 (JP); Funakubo, Makoto, Fujiyoshida-shi Yamanashi 403-0002 (JP); Tamaki, Takeshi FANUC Dai3virakaramatsu, Minamitsuru-gun Yamanashi 401-0511 (JP)
(74) Representative: Thum, Bernhard

(57) **Abstract**

A mold used in a manufacturing process of a rotor of an electric motor, the rotor including a rotor core with a plurality of magnet-retaining apertures and a plurality of permanent magnets individually received and retained in the magnet-retaining apertures of the rotor core, for pouring a resinous material into gaps defined between the respective magnet-retaining apertures and the respective permanent magnets. The mold includes a cavity for accommodating the rotor core at a predetermined position, with the rotor core receiving the plurality of permanent magnets individually in the plurality of magnet-retaining apertures; and an adjustable support mechanism for securely supporting the rotor core accommodated in the cavity in a manner as to meet a dimensional deviation in an axial direction of the rotor core.

## Description

### BACKGROUND OF THE INVENTION

### 1. Field of the Invention

The present invention relates to a mold used for manufacturing a rotor of an electric motor.

### 2. Description of the Related Art

In a rotor of an electric motor having a permanent-magnet field system (e.g., a synchronous motor), it is known that a plurality of permanent magnets are mounted in an embedded manner at predetermined positions in a cylindrical rotor core formed by stacking or laminating magnetic sheets such as silicon steel plates. The rotor of this type is typically manufactured by preliminarily forming a plurality of magnet-retaining apertures (typically, axially-extending through holes) in a predetermined circumferentially-distributed arrangement about a rotor shaft, each aperture having a profile substantially corresponding to a profile of each permanent magnet; inserting respectively the plurality of permanent magnets into the magnet-retaining apertures; and fixing each permanent magnet by an adhesive or an impregnant.

In the above-described conventional method for manufacturing a rotor, in the case where the adhesive is used for fixing the magnets, relatively complicated manual operations, such as the application of the adhesive to the permanent magnets, the removal of the surplus adhesive leaking from the magnet-retaining apertures, and the like, may be required. Also, in the case where an impregnant is used for fixing the magnets, relatively large-scale equipment tends to be required for an immersion process for immersing the rotor core in the impregnant, a heating process for solidifying the impregnant, etc., and thus the number of manufacturing steps tends to increase. On the other hand, it is also known that, as a rotor manufacturing method capable of resolving the above inconveniences, the rotor core is previously fabricated so that predetermined gaps are formed between respective magnet-retaining apertures and respective permanent magnets, and a resinous material is locally pored into the gaps and solidified therein, so as to fix the permanent magnets to the rotor core (e.g., see Japanese Unexamined Patent Publication (Kokai) No. 5-83892 (JP-A-5-083892)).

In the rotor manufacturing method disclosed in JP-A-5-083892, grooves (i.e., gaps) extending in an axial direction are formed adjacent to and in communication with the respective magnet-retaining apertures of a rotor core, and a molten resinous material is injected into the grooves and solidified therein by an injection molding technique, so as to fix the permanent magnets in the magnet-retaining apertures. In the injection molding process, a mold including a cavity for accommodating the rotor core and an injection molding machine onto which the mold can be installed are provided, and the rotor core receiving the permanent magnets in the respective magnet-retaining apertures is supported firmly and securely in the cavity of the mold. In this state, the resinous material is injected into the grooves of the rotor core under pressure by using an injection molding machine.

In the rotor manufacturing method adopting the injection molding technique set forth in the above-described JP-A-5-083892, by providing only the mold including the cavity for accommodating the rotor core and the injection molding machine onto which the mold can be installed, it is possible to easily and quickly perform a work for fixing the permanent magnets to the respective magnet-retaining apertures of the rotor core and, therefore, advantages are obtained wherein complicated manual operations when using an adhesive and large-scale equipment when using an impregnant are eliminated. However, in the rotor core formed by laminating the magnetic sheets, a variation (i.e., a deviation), especially in an axial dimension thereof occurs relatively easily, and therefore when the rotor core is accommodated in the cavity of the mold, a clearance may be formed between an outer surface of the rotor core and a core support surface of the cavity. The clearance thus formed may make a support for the rotor core in the cavity unstable, and thus may make it difficult to accurately pour sufficient molten resinous material into the gaps of the rotor core. As a result, the fixing strength of the permanent magnets on the rotor core may be insufficient and a problem may thus arise in the operational reliability of, especially, a high-torque electric motor.

### SUMMARY OF THE INVENTION

It is an object of the present invention to provide a mold used in a manufacturing process of a rotor of an electric motor having a permanent-magnet field system, for poring a resinous material into gaps between respective magnet-retaining apertures formed in a rotor core and respective permanent magnets, wherein sufficient resinous material can be accurately poured into the gaps in the rotor core while permitting a deviation in an axial dimension of the rotor core, and thereby sufficient fixing strength for the permanent magnets in the rotor core can be surely obtained and an electric motor rotor having excellent operational reliability can be manufactured.

To accomplish the above object, the present invention provides a mold used in a manufacturing process of a rotor of an electric motor, the rotor including a rotor core with a plurality of magnet-retaining apertures and a plurality of permanent magnets individually received and retained in the plurality of magnet-retaining apertures of the rotor core, for pouring a resinous material into gaps defined between the respective magnet-retaining apertures and the respective permanent magnets, the mold comprising a cavity for accommodating the rotor core at a predetermined position, with the rotor core receiving the plurality of permanent magnets individually in the plurality of magnet-retaining apertures; and an adjustable support mechanism for securely supporting the rotor core accommodated in the cavity in a manner as to meet a dimensional deviation in an axial direction of the rotor core.

In the mold configured as described above, the support mechanism may comprise a movable support member movably provided in the cavity, and a position adjusting mechanism allowing the movable support member to be shifted in the axial direction relative to the rotor core accommodated in the cavity, and the movable support member may securely support the rotor core at the predetermined position in the cavity by the action of the position adjusting mechanism.

In this arrangement, the position adjusting mechanism may comprise a spring member. Alternatively, the position adjusting mechanism may include a drive source exerting a driving force for shifting the movable support member in the axial direction, and a force transmission member for transmitting the driving force of the drive source to the movable support member.

Also, the movable support member may be provided with a forming surface for hermetically closing openings at axial ends of the gaps defined between the respective magnet-retaining apertures and the respective permanent magnets, in connection with the rotor core accommodated in the cavity.

Further, in the mold configured as described above, the support mechanism may comprise a spring member for applying an elastic pressing force in the axial direction to the rotor core accommodated in the cavity and securely supporting the rotor core at the predetermined position in the cavity.

### BRIEF DESCRIPTION OF THE DRAWINGS

The above and other objects, features and advantages of the present invention will become more apparent from the following description of preferred embodiments in connection with the accompanying drawings, wherein:
Fig. 1 is a sectional view showing a mold according to an embodiment of the present invention with a rotor core being accommodated in a cavity;
Fig. 2 is a perspective view showing the mold of Fig. 1 in an open state;
Fig. 3 is a perspective view showing a rotor of an electric motor, which can be manufactured by using the mold of Fig. 1;
Fig. 4A is a plan view of the rotor of Fig. 3;
Fig. 4B is an enlarged view of a major part of the rotor of Fig. 3; and
Fig. 5 is a sectional view showing a mold according to another embodiment of the present invention with a rotor core being accommodated in a cavity.

### DETAILED DESCRIPTION

The embodiments of the present invention are described below, in detail, with reference to the accompanying drawings. In the drawings, the same or similar components are denoted by common reference numerals.

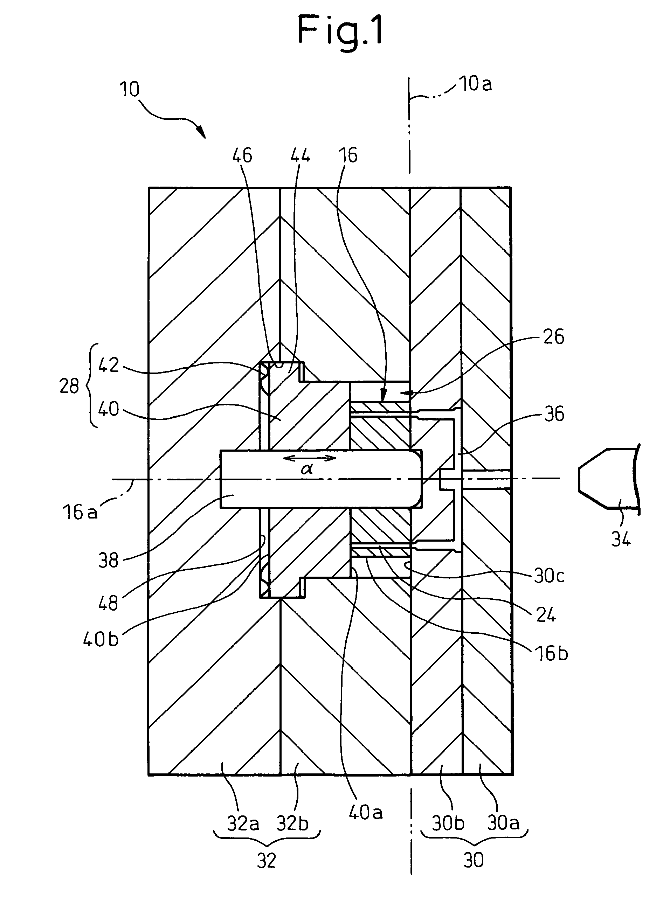

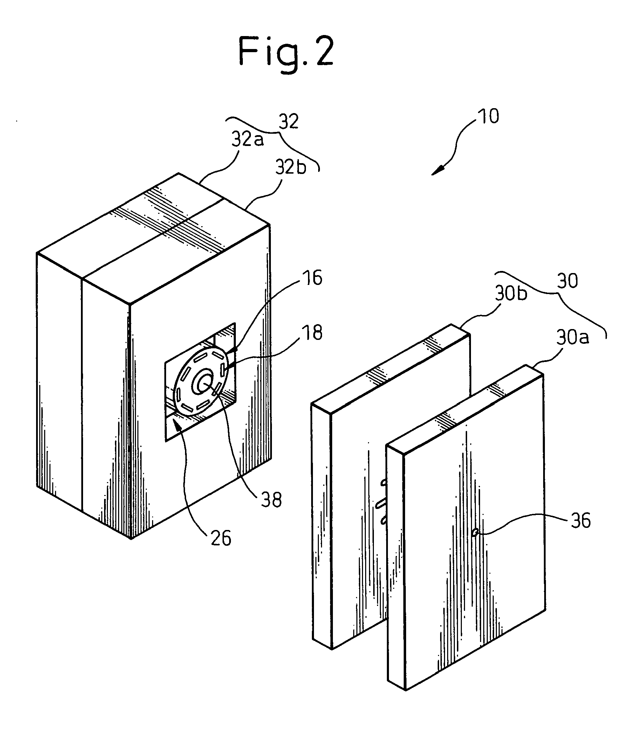

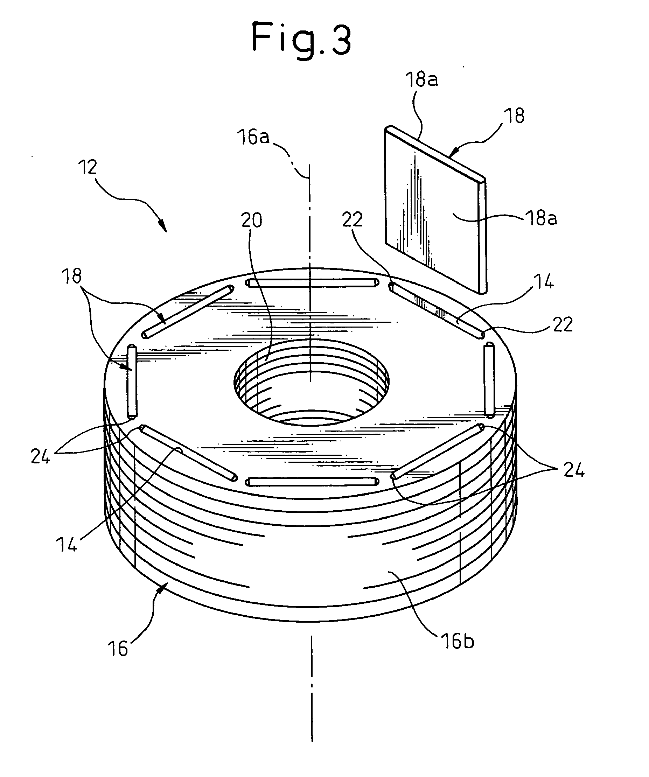

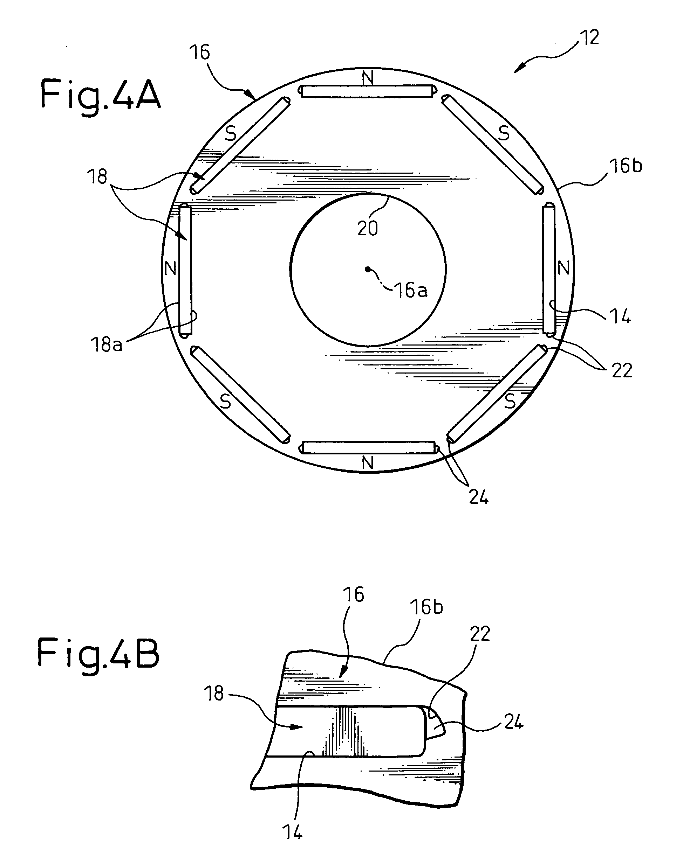

Referring to the drawings, Figs. 1 and 2 are illustrations respectively showing a mold 10 according to an embodiment of the present invention, and Figs. 3, 4A and 4B are illustrations respectively showing a rotor 12 of an electric motor, which can be manufactured by using the mold 10. The rotor 12 includes a rotor core 16 having a plurality of (eight, in the drawing) magnet-retaining apertures 14 and a plurality of (eight, in the drawing) permanent magnets 18 individually received and retained in the plurality of magnet-retaining apertures 14 of the rotor core 16.

The rotor core 16 is a substantially cylindrical member formed by stacking or laminating magnetic sheets, such as silicon steel plates, and is provided at a center thereof with a shaft hole 20 penetrating therethrough along an axis 16a (Fig. 3). The plurality of magnet-retaining apertures 14 are formed respectively as axially-extending through holes, and are disposed in proximity to an outer circumferential surface 16b of the rotor core 16 and in a predetermined, circumferentially regular-interval arrangement about the axis 16a. Each of the magnet-retaining apertures 14 has a slot-like profile substantially corresponding to a tabular profile of the permanent magnet 18 as to be retained. The rotor core 16 is attached to a shaft (not shown) at the shaft hole 20 by, for example, a shrinkage fit, with the permanent magnets 18 being securely retained in the respective magnet-retaining apertures 14. The rotor 12 having the shaft is rotatably supported on a housing (not shown) in a state where the outer circumferential surface 16b of the rotor core 16 opposes a stator (not shown) with a predetermined air-gap defined therebetween, whereby an electric motor is constituted.

Each of the permanent magnets 18 has a flat shape which is substantially rectangular as seen in a plan view, and is magnetized or polarized in a thickness direction so as to form N and S poles respectively in a pair of major surfaces 18a thereof (Fig. 3). The permanent magnets 18 are individually inserted into the corresponding magnet-retaining apertures 14 in an alternate arrangement where the mutually-different magnetic poles of the permanent magnets 18 disposed side-by-side in a circumferential direction are oriented toward the outer circumferential surface 16b of the rotor core 16. In this state, magnetic poles corresponding to those of the nearest permanent magnets 18 are formed on the outer circumferential surface 16b of the rotor core 16 in a circumferentially alternate arrangement (Fig. 4A) .

Each of the magnet-retaining apertures 14 is provided with a pair of grooves 22 continuously extending in the axial direction and formed at longitudinally opposite ends of each aperture 14 as seen in the plan view of Fig. 4A. The grooves 22 of each magnet-retaining aperture 14 are disposed to oppose to a pair of lateral edges of the permanent magnet 18 received in the aperture 14, so as to form gaps 24 having predetermined shapes between the magnet-retaining aperture 14 and the permanent magnet 18 (Fig. 4B). The mold 10 is used to fill the respective gaps 24 with a molten resinous material by, for example, an injection molding machine (not shown).

The mold 10 includes a cavity 26 for accommodating the rotor core 16 at a predetermined position, with the rotor core 16 receiving the plurality of permanent magnets 18 individually in the plurality of magnet-retaining apertures 14 (Fig. 4A); and an adjustable support mechanism 28 for securely supporting the rotor core 16 accommodated or received in the cavity 26 in a manner as to meet or accommodate a dimensional deviation in an axial direction of the rotor core 16. In the illustrated embodiment, the mold 10 is constructed from a mutually-combined pair of mold members 30, 32 separable from each other at a parting line 10a, and is mounted on a mold clamping mechanism of the injection molding machine (not shown) with one mold member 30 being carried on a stationary platen (not shown) and the other mold member 32 being carried on a movable platen (not shown). The mold member 30 at a stationary side is provided with a material passage (including a sprue, a runner and a gate) 36 for distributing the flow of the molten resinous material in predetermined directions, which material is supplied from an injection mechanism (a part of a nozzle 34 is shown) of the injection molding machine. On the other hand, the mold member 32 at a movable side is provided with the cavity 26 and the adjustable support mechanism 28, described above.

The material passage 36 of the mold member 30 is configured in such a manner that the molten resinous material can be appropriately distributed and poured into each of the plurality of gaps 24 defined between the magnet-retaining apertures 14 and the permanent magnets 18 (Figs. 4A and 4B) in the rotor core 16 disposed at a position in the cavity 26 proper for a pouring of the resinous material. In this connection, the mold member 30 has a known two-piece structure (i.e., a first element 30a and a second element 30b) for removing the resinous material solidified in the material passage 36. On the other hand, the mold member 32 has a two-piece structure (i.e., a first element 32a and a second element 32b) for incorporating therein the support mechanism 28.

The mold member 32 is provided with a centering support element 38 extending into the cavity 26 (and fixed to the first element 32a, in the drawing). The centering support element 38 is shaped and dimensioned to be fittable into the shaft hole 20 (Fig. 3) of the rotor core 16 with no wobbling, and locates the rotor core 16, accommodated in the cavity 26, at the proper position for the pouring of the resinous material with reference to the axis 16a. The cavity 26 is shaped and dimensioned to form a space between the inner wall surface of the cavity 26 and the outer circumferential surface 16b of the rotor core 16 in a state where the rotor core 16 is attached to the centering support element 38. For example, in a case where the rotor core 16 is inserted into the cavity 26 by an automatic machine such as a robot (not shown), the space serves to facilitate the motion of a holding element (e.g., a hand) for holding the rotor core 16.

The support mechanism 28 includes a movable support member 40 movably provided in the cavity 26, and a position adjusting mechanism 42 allowing the movable support member 40 to be shifted in the axial direction with respect to the rotor core 16 accommodated in the cavity 26 (Fig. 1). The movable support member 40 is an annular member supported on the centering support element 38 in an axially slidable manner, and is disposed so that a flange portion 44 formed to protrude radially outward along an outer circumferential surface of the movable support member 40 is inserted into an annular groove 46 formed between the first element 32a and the second element 32b of the mold member 32 to be adjacent to the cavity 26. In this state, the flange portion 44 and the annular groove 46 cooperate with each other to restrict the shifting motion of the movable support member 40 (shown by an arrow α) within a predetermined range defined along the centering support element 38.

The movable support member 40 has a generally flat axial end face 40a facing toward the parting line 10a of the mold 10 (i.e., toward an opening of the cavity 26). The end face 40a of the movable support member 40 cooperates with an end face 30c of the mold member 30 at the stationary side (i.e., an end face of the second element 30b in which the gates of the material passage 36 open, in the drawing) to firmly and securely hold therebetween the rotor core 16 accommodated in the cavity 26. In this state, the end face 40a of the movable support member 40 is closely abutted against one axial end face of the rotor core 16 to act as a forming surface 40a for hermetically closing the opening at one axial end of each of the gaps 24 (Figs. 4A and 4B) defined between the respective magnet-retaining apertures 14 and the respective permanent magnets 18.

The position adjusting mechanism 42 includes a spring member 42 that applies an elastic pressing force to the movable support member 40 in a direction along the centering support element 38. As shown in Fig. 1, the spring member 42 may be configured from, for example, a conical or disc spring interposed between a recess 48 formed in the first element 32a of the mold member 32 and another axial end face 40b of the movable support member 40. In a state where the rotor core 16 is properly accommodated in the cavity 26, the spring member 42 passively generates a deflection meeting the dimensional deviation in the axial direction of the rotor core 16, and permits the movable support member 40 to be shifted along the centering support element 38. In this state, the spring member 42 exerts a stable elastic pressing force to allow the rotor core 16 to be firmly held between the end face 40a of the movable support member 40 and the end face 30c of the mold member 30 against an injection pressure of the molten resinous material. In other words, under the action of the spring member (or the position adjusting mechanism) 42, the movable support member 40 securely supports the rotor core 16 at a predetermined position (or the appropriate position for pouring the resinous material) in the cavity 26. In this connection, it is preferred that the spring member 42 has an initial deflection during a period when the rotor core 16 is not accommodated in the cavity 26, for retaining the movable support member 40 at a shifting limit at the side of the cavity opening.

In the mold 10 configured as described above, even when a plurality of rotor cores 16 respectively having the axial dimensional deviation within a range allowing the adjustment of the support mechanism 28 are provided, it is possible, by the meeting function of the support mechanism 28 (more specifically, the passive shifting motion of the movable support member 40), to firmly and securely support each of the rotor cores 16 in the cavity 26 while permitting the dimensional deviation. Therefore, it is possible to accurately pour the molten resinous material at a required pressure into the gaps 24 between the respective magnet-retaining apertures 14 formed in the rotor core 16 and the respective permanent magnets 18. The molten resinous material poured into the gaps under the required pressure entirely fills the gaps 24, so as to firmly and mechanically couple the permanent magnets 18 to the rotor core 16. As a result, it is possible, by using the mold 10, to ensure sufficient fixing strength of the permanent magnets 18 with high reproducibility, in connection with the plurality of rotor cores 16 having the axial dimensional deviation caused due to the laminated structure, and thus to manufacture the rotor 12 of an electric motor having excellent operational reliability with a high yield. In this connection, the resinous material molded in the gaps 24 is preferably selected from engineering plastics that have excellent fluidity and mechanical strength.

In particular, it is possible to provide the support mechanism 28 including the movable support member 40 and the position adjusting mechanism 42 with a simple configuration and excellent reliability. Also, in the case where the spring member 42 is adopted as the position adjusting mechanism 42, the spring member 42 can make the movable support member 40 passively shift to meet the axial dimensional deviation of the rotor core 16, so that it is possible to further simplify the configuration of the support mechanism 28. Furthermore, in the case where the movable support member 40 is provided with the forming surface 40a for hermetically closing the opening at one axial end of each of the gaps 24 in connection with the rotor core 16 accommodated in the cavity 26, the provision of a separate member having such forming surface becomes unnecessary, so that it is possible to facilitate the simplification and downsizing of the configuration of the mold 10.

In place of the configuration of the support mechanism 28 adopted in the above-described embodiment, in which the spring member (or the position adjusting mechanism) 42 indirectly supports the rotor core 16 through the movable support member 40, another configuration may be adopted, in which the spring member 42 directly supports the rotor core 16. In the latter case, the spring member (e.g., the conical or disc spring) 42 constituting the support mechanism 28 acts to directly apply an axial elastic pressing force in the axial direction to the rotor core 16 accommodated in the cavity 26, and thereby securely supports the rotor core 16 at the predetermined position (or the proper position for pouring the resinous material) in the cavity 26. According to this configuration, the number of parts of the mold 10 can be reduced and the downsizing of the mold 10 can be further facilitated.

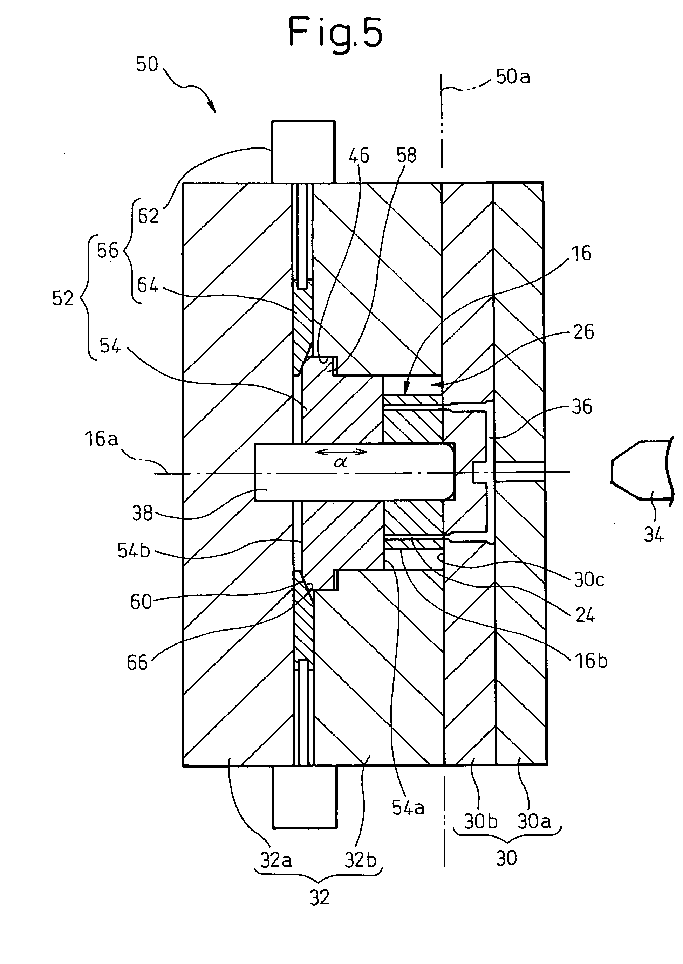

Fig. 5 shows a mold 50 according to another embodiment of the present invention, in a state where a rotor core 16 is accommodated in a cavity 26. The mold 50 has a configuration substantially identical to that of the mold 10 described above, except for the configuration of an adjustable support mechanism for permitting a dimensional deviation in an axial direction of the rotor core 16 and thereby securely supporting the rotor core 16 accommodated in the cavity 26. Therefore, corresponding components are designated by common reference numerals, and the descriptions thereof are not repeated.

The support mechanism 52 of the mold 50 includes a movable support member 54 movably provided in the cavity 26, and a position adjusting mechanism 56 allowing the movable support member 54 to be shifted in the axial direction with respect to the rotor core 16 accommodated in the cavity 26. The movable support member 54 has a configuration substantially identical to that of the movable support member 40 in the mold 10 described above. More specifically, the movable support member 54 is provided with a flange portion 58 that cooperates with the annular groove 46 of the mold member 32 to restrict the shifting motion of the movable support member 54 (shown by an arrow α), and an axial end face 54a (i.e., a forming surface 54a for hermetically closing the opening at one axial end of each of the gaps 24 in the rotor core 16) that cooperates with the end face 30c of the mold member 30 to firmly and securely hold therebetween the rotor core 16 accommodated in the cavity 26. However, in the movable support member 54, a tapered surface 60 is additionally formed, adjacent to the axial end face 54b near the flange portion 58, to extend along the flange portion 58 in a chamfering manner.

The position adjusting mechanism 56 includes a drive source 62 exerting a driving force for shifting the movable support member 54 in the axial direction along the centering support element 38, and a force transmission member 64 for transmitting the driving force of the drive source to the movable support member 54. The drive source 62 may be configured by a hydraulic or pneumatic device or an electric motor. The force transmission member 64 may be constituted from a thin plate element interposed between the first element 32a and the second element 32b of the mold member 32 and disposed movably in a radial direction about the centering support element 38. The force transmission member 64 is joined to an output shaft of the drive source 62 and is moved radially about the centering support element 38 by the operation of the drive source 62.

At an end of the force transmission member 64 near the centering support element 38, a driving tapered surface 66 is formed to be capable of abutting against the tapered surface 60 of the movable support member 54. The force transmission member 64 is moved radially inward (i.e., in a direction toward the centering support member 38) under the driving force of the drive source 62 and, during this movement, brings the driving tapered surface 66 thereof into sliding abutment with the tapered surface 60 of the movable support member 54. As a result, the radially inward movement of the force transmission member 64 is converted to the axially forward displacement of the movable support member 54 (in the direction toward the opening of the cavity 26).

In a state where the rotor core 16 is properly accommodated in the cavity 26, the position adjusting mechanism 56 configured as described above can positively adjust the axial position of the movable support member 54 in such a manner as to meet the axial dimensional deviation of the rotor core 16. As a result, under the action of the position adjusting mechanism 56, the movable support member 54 securely supports the rotor core 16 at the predetermined position (or the appropriate position for pouring the resinous material) in the cavity 26. In this connection, it is possible to firmly and stably hold the rotor core 16, by the driving or retaining force of the drive source 62, between the end face 54a of the movable support member 54 and the end face 30c of the mold member 30 against the pouring pressure of the molten resinous material.

Thus, also in the mold 50 configured as described above, even when a plurality of rotor cores 16 respectively having the axial dimensional deviation within an adjustable range of the support mechanism 52 are provided, it is possible, by the meeting function of the support mechanism 52 (more specifically, the positive displacement of the movable support member 54), to firmly and securely support each of the rotor cores 16 in the cavity 26 while permitting the dimensional deviation. Therefore, in a manner similar to the mold 10 described above, it is possible, by using the mold 50, to ensure sufficient fixing strength of the permanent magnets 18 with high reproducibility, in connection with the plurality of rotor cores 16 having the axial dimensional deviation caused due to the laminated structure, and thus to manufacture the rotor 12 of an electric motor having excellent operational reliability with a high yield.

In particular, in the mold 50, the drive source 62 and the force transmission member 64 can act to accurately locate the movable support member 54 at the required position in the cavity 26 in a manner as to meet the axial dimensional deviation of the rotor core 16, so that it is possible to improve the molding accuracy of the resinous material inside the plurality of gaps 24 in the rotor core 16. Further, in the case where the hydraulic or pneumatic device or the electric motor is adopted as the drive source 62, there will be an advantage in that the drive source 62 can be controlled more easily.

The configuration of the present invention is not limited to the preferred embodiments described above, but may be variously modified. For example, while the mold according to each of the above embodiments is described as being used in the manufacturing process of the rotor core composed of the laminated magnetic sheets such as silicon steel plates, a mold according to the present invention may be applied to a rotor manufactured by embedding permanent magnets in a rotor core made of a magnetic metal block. In the latter case, characteristic effects similar to those described above may be obtained.

While the invention has been described with reference to specific preferred embodiments, it will be understood, by those skilled in the art, that various changes and modifications may be made thereto without departing from the scope of the following claims.

## Claims

1. A mold (10) used in a manufacturing process of a rotor (12) of an electric motor, the rotor including a rotor core (16) with a plurality of magnet-retaining apertures (14) and a plurality of permanent magnets (18) individually received and retained in the plurality of magnet-retaining apertures of the rotor core, for pouring a resinous material into gaps (24) defined between the respective magnet-retaining apertures and the respective permanent magnets, **characterized in that** the mold comprises:
a cavity (26) for accommodating the rotor core at a predetermined position, with the rotor core receiving the plurality of permanent magnets individually in the plurality of magnet-retaining apertures; and
an adjustable support mechanism (28) for securely supporting the rotor core accommodated in said cavity in a manner as to meet a dimensional deviation in an axial direction of the rotor core.

2. A mold as set forth in claim 1, wherein said support mechanism comprises a movable support member (40, 54) movably provided in said cavity, and a position adjusting mechanism (42, 56) allowing said movable support member to be shifted in the axial direction relative to the rotor core accommodated in said cavity; and wherein said movable support member securely supports the rotor core at said predetermined position in said cavity by an action of said position adjusting mechanism.

3. A mold as set forth in claim 2, wherein said position adjusting mechanism comprises a spring member (42).

4. A mold as set forth in claim 2, wherein said position adjusting mechanism includes a drive source (62) exerting a driving force for shifting said movable support member (54) in the axial direction, and a force transmission member (64) transmitting said driving force of said drive source to said movable support member.

5. A mold as set forth in claim 4, wherein said drive source comprises a hydraulic or pneumatic device or an electric motor.

6. A mold as set forth in any one of claims 2 to 5, wherein said movable support member is provided with a forming surface (40a, 54a) for hermetically closing openings at axial ends of the gaps defined between the respective magnet-retaining apertures and the respective permanent magnets, in connection with the rotor core accommodated in said cavity.

7. A mold as set forth in claim 1, wherein said support mechanism comprises a spring member (42) for applying an elastic pressing force in the axial direction to the rotor core accommodated in said cavity and securely supporting the rotor core at said predetermined position in said cavity.
